# EUROPEAN PATENT APPLICATION

(11) **EP 4 160 545 A1**
(43) Date of publication of application: **05.04.2023**
(21) Application number: 20938408.0
(22) Date of filing: 07.12.2020
(51) Int. Cl.: G06T 19/00

(54) **THREE-DIMENSIONAL AVATAR GENERATION DEVICE, THREE-DIMENSIONAL AVATAR GENERATION METHOD, AND THREE-DIMENSIONAL AVATAR GENERATION PROGRAM**

(30) Priority: 29.05.2020 JP 2020094065
(71) Applicant: Pocketrd Co., Ltd., Tokyo 150-0011 (JP)
(72) Inventor: UCHIDA Shigeki, Tokyo 150-0011 (JP); SAITO Hajime, Tokyo 150-0011 (JP); SAKAMOTO Kazuki, Tokyo 150-0011 (JP)
(74) Representative: Jeck, Jonathan
(86) International application number: PCT/JP2020/045480
(87) International publication number: WO 2021/240848

(57) **Abstract**

Provided are a device and a method for generating a high-quality three-dimensional avatar based on captured image data in a simpler manner. A three-dimensional avatar generation device includes an archetype generating unit 1, a shape information generating unit 2, a two-dimensional image generating unit 3, a feature point extracting unit 4, a feature point adding unit 5, a skeleton correspondence determining unit 6, a skeleton adjusting unit 7, and a surface adjusting unit 8. The archetype generating unit 1 generates a universal archetype. The shape information generating unit 2 generates three-dimensional surface shape information on an object, such as a person, for which a three-dimensional avatar is to be generated based on captured image data of the object. The two-dimensional image generating unit 3 converts the three-dimensional surface shape information into a two-dimensional image. The feature point extracting unit 4 extracts feature points from the two-dimensional image. The feature point adding unit 5 adds the extracted feature points to the three-dimensional surface shape information. The skeleton correspondence determining unit 6 determines the correspondence between the feature points added to the three-dimensional surface shape information and a skeletal structure of the universal archetype. The skeleton adjusting unit 7 adjusts the three-dimensional distribution of the skeletal structure of the universal archetype so as to match the three-dimensional distribution of the feature points. The surface adjusting unit 8 adjusts the surface shape of the universal archetype so as to match the three-dimensional shape of the surface of the object included in the three-dimensional shape information.

## Description

### Field

The present invention relates to a three-dimensional avatar generation device and the like that create three-dimensional computer graphics data based on captured image data of a person or the like.

### Background

With the improvement in processing capability or the like of electronic devices, such as computers, games and video content using three-dimensional computer graphics have recently been used. In other words, well-known computer game series used to be represented by two-dimensional animation have been remade using 3DCG, and movies based on classic fairy tales have been made using 3DCG and have become a global hit. Three-dimensional computer graphics are now widely used as a de fac-to standard for representation in video content.

There has been developed a technology of using realistic three-dimensional computer graphics modeled after a real person or the like as an advanced form of three-dimensional computer graphics. This technology uses an avatar (character as an alter ego) that imitates a person who plays a computer game or the like as a character of the game or a person with whom the player plays the game together. The use of avatars enhances the sense of immersion in the world of the game story and enables the player to enjoy the game as a more realistic experience.

Both Patent Literatures 1 and 2 disclose examples of using avatars that imitate the player's own or co-player's appearance in a computer game that represents a virtual space using a head-mounted display.

### Citation List

### Patent Literature

Patent Literature 1: Japanese Patent Application Laid-open No. 2019-012509
Patent Literature 2: Japanese Patent Application Laid-open No. 2019-139673

### Summary

### Technical Problem

Neither Patent Literature 1 nor 2, however, discloses how to create an avatar that imitates a person, such as a player. In actual games, for example, an avatar is typically created by: preparing a general body type for the limbs and pasting a photo of the face or a self-portrait illustration prepared by the user using a drawing tool or the like onto a sphere or an ellipsoid for the head. Such an avatar, however, has the body shape and the head completely different from those of the actual player, making it difficult for the game player to feel immersed in the world of the game story.

By contrast, it is not practical to employ a method of creating an avatar of the user in the same manner as typical three-dimensional computer graphics. This is because creating a character using three-dimensional computer graphics requires the following processing: modeling a mesh structure corresponding to the skin or the like of a human body, constructing a skeleton structure corresponding to the skeleton of the human body, and skinning for associating the skeleton with the skin, which is the function corresponding to the muscles and tendons of the human body.

Modeling, for example, out of these pieces of processing, can be performed by combining images of the user's figure taken from a plurality of directions and generating a three-dimensional shape. Based on the three-dimensional shape, modeling on the surface shape can be performed automatically to some extent. However, constructing the skeleton or skinning relating to the internal structure cannot be automatically performed based on the images of the user's figure (surface) alone, and these pieces of processing needs to be manually performed by skilled technicians for a long time. In view of the fact that such time and effort are required, it is not practical to create a character using typical three-dimensional computer graphics for an avatar of an individual user.

In view of the disadvantages described above, an object of the present invention is to provide a device and a method for generating a high-quality three-dimensional avatar based on captured image data in a simpler manner.

### Solution to Problem

To achieve the object described above, a three-dimensional avatar generation device according to claim 1 configured to generate a three-dimensional avatar that represents a three-dimensional surface shape with a group of vertices and/or a group of faces based on captured image data of an object, includes: surface shape generation means configured to generate the three-dimensional surface shape based on the captured image data of the object; skeletal structure estimation means configured to convert the three-dimensional surface shape of the object into a two-dimensional image and estimate at least part of a skeletal structure based on the two-dimensional image; skeletal correspondence determination means configured to determine correspondence between the skeletal structure estimated by the skeletal structure estimation means and a skeletal structure in a universal archetype avatar that defines the three-dimensional surface shape, the skeletal structure, and relevance between the three-dimensional surface shape and the skeletal structure; skeleton adjustment means configured to adjust a position of the skeletal structure of the universal archetype avatar so as to be consistent with the correspondence determined by the skeletal correspondence determination means while maintaining a connection relation between components of the skeletal structure; surface adjustment means configured to move a group of vertices and/or a group of faces of the universal archetype avatar to positions corresponding to a group of vertices and/or a group of faces that represent the three-dimensional surface shape of the object based on correspondence between the group of vertices and/or the group of faces that represent the three-dimensional surface shape of the object and the group of vertices and/or the group of faces that represent the three-dimensional surface shape of the universal archetype avatar subjected to the positional adjustment of the skeletal structure; and image addition means configured to add an image obtained by processing the captured image data of the object to a surface of the universal archetype avatar on which the positional movement of the group of vertices and/or the group of faces is performed by the surface adjustment means.

To achieve the object described above, in a three-dimensional avatar generation device according to claim 2 in the above invention, the universal archetype avatar defines motion information that is information on positional change of the entire skeletal structure and an interlocking state between the components of the skeletal structure in a motion, shape transition information that defines a transition state of the group of vertices when shifting from a first shape to a second shape in at least a partial region of the three-dimensional surface shape, and information on the group of vertices that represents an internal shape, and the group of vertices that represents the internal shape is not a target of the positional movement by the surface adjustment means.

To achieve the object described above, a three-dimensional avatar generation device according to claim 3 in the above invention further includes: surface region determination means configured to determine a skin-exposed region, a clothing region, and a hair region in the three-dimensional surface shape based on the captured image data of the object; basic body shape generation means configured to generate a surface shape of a basic body shape by removing a clothing part from the clothing region determined by the surface region determination means; and shape transition means configured to change the surface shape of the universal archetype avatar so as to be consistent with the basic body shape based on the shape transition information, the surface adjustment means does not perform surface adjustment on at least the clothing region and the hair region, and a three-dimensional avatar not having information on clothing and hair of the captured image data of the object is generated.

To achieve the object described above, a three-dimensional avatar generation device according to claim 4 in the above invention includes: clothing region extraction means configured to extract a surface structure positioned in the clothing region on the three-dimensional surface shape based on the captured image data of the object; clothing archetype generation means configured to convert an extracted part into a three-dimensional clothing archetype; archetype connection means configured to connect the clothing archetype to the three-dimensional avatar based on the captured image data; universal shaping means configured to change the shape of the three-dimensional avatar and the clothing archetype that are connected so as to match a three-dimensional surface shape of the universal archetype avatar based on the shape transition information; information transfer means configured to transfer information on the relevance between the three-dimensional surface shape and the skeletal structure of the universal archetype avatar and the shape transition information to the clothing archetype the shape of which is changed; and connection cancellation means configured to cancel the connection of the clothing archetype with the three-dimensional avatar after the information is transferred by the information transfer means.

To achieve the object described above, a three-dimensional avatar generation method according to claim 5, which is a method for generating a three-dimensional avatar that represents a three-dimensional surface shape with a group of vertices and/or a group of faces based on captured image data of an object, includes: a surface shape generation step of generating the three-dimensional surface shape based on the captured image data of the object; a skeletal structure estimation step of converting the three-dimensional surface shape of the object into a two-dimensional image and estimating at least part of a skeletal structure based on the two-dimensional image; a skeletal correspondence determination step of determining correspondence between the skeletal structure estimated at the skeletal structure estimation step and a skeletal structure in a universal archetype avatar that defines the three-dimensional surface shape, the skeletal structure, and relevance between the three-dimensional surface shape and the skeletal structure; a skeleton adjustment step of adjusting a position of the skeletal structure of the universal archetype avatar so as to be consistent with the correspondence determined at the skeletal correspondence determination step while maintaining a connection relation between components of the skeletal structure; a surface adjustment step of moving a group of vertices and/or a group of faces of the universal archetype avatar to positions corresponding to a group of vertices and/or a group of faces that represent the three-dimensional surface shape of the object based on correspondence between the group of vertices and/or the group of faces that represent the three-dimensional surface shape of the object and the group of vertices and/or the group of faces that represent the three-dimensional surface shape of the universal archetype avatar subjected to the positional adjustment of the skeletal structure; and an image addition step of adding an image obtained by processing the captured image data of the object to a surface of the universal archetype avatar on which the positional movement of the group of vertices and/or the group of faces is performed at the surface adjustment step.

To achieve the object described above, in a three-dimensional avatar generation method according to claim 6 in the above invention, the universal archetype avatar defines motion information that is information on positional change of the entire skeletal structure and an interlocking state between the components of the skeletal structure in a motion, shape transition information that defines a transition state of the group of vertices when shifting from a first shape to a second shape in at least a partial region of the three-dimensional surface shape, and information on the group of vertices that represents an internal shape, and the group of vertices that represents the internal shape is not a target of the positional movement at the surface adjustment step.

To achieve the object described above, a three-dimensional avatar generation method according to claim 7 in the above invention further includes: a surface region determination step of determining a skin-exposed region, a clothing region, and a hair region in the three-dimensional surface shape based on the captured image data of the object; a basic body shape generation step of generating a surface shape of a basic body shape by removing a clothing part from the clothing region determined at the surface region determination step; and a shape transition step of changing the surface shape of the universal archetype avatar so as to be consistent with the basic body shape based on the shape transition information, surface adjustment is not performed on at least the clothing region and the hair region at the surface adjustment step, and a three-dimensional avatar not having information on clothing and hair of the captured image data of the object is generated.

To achieve the object described above, a three-dimensional avatar generation method according to claim 8 in the above invention further includes: a clothing region extraction step of extracting a surface structure positioned in the clothing region on the three-dimensional surface shape based on the captured image data of the object; a clothing archetype generation step of converting an extracted part into a three-dimensional clothing archetype; an archetype connection step of connecting the clothing archetype to the three-dimensional avatar based on the captured image data; a universal shaping step of changing the shape of the three-dimensional avatar and the clothing archetype that are connected so as to match a three-dimensional surface shape of the universal archetype avatar based on the shape transition information; an information transfer step of transferring information on the relevance between the three-dimensional surface shape and the skeletal structure of the universal archetype avatar and the shape transition information to the clothing archetype the shape of which is changed; and a connection cancellation step of canceling the connection of the clothing archetype with the three-dimensional avatar after the information is transferred at the information transfer step.

To achieve the object described above, a three-dimensional avatar generation program according to claim 9, which is a program for generating a three-dimensional avatar that represents a three-dimensional surface shape with a group of vertices and/or a group of faces based on captured image data of an object, causes a computer to perform: a surface shape generation step of generating the three-dimensional surface shape based on the captured image data of the object; a skeletal structure estimation step of converting the three-dimensional surface shape of the object into a two-dimensional image and estimating at least part of a skeletal structure based on the two-dimensional image; a skeletal correspondence determination step of determining correspondence between the skeletal structure estimated at the skeletal structure estimation step and a skeletal structure in a universal archetype avatar that defines the three-dimensional surface shape, the skeletal structure, and relevance between the three-dimensional surface shape and the skeletal structure; a skeleton adjustment step of adjusting a position of the skeletal structure of the universal archetype avatar so as to be consistent with the correspondence determined at the skeletal correspondence determination step while maintaining a connection relation between components of the skeletal structure; a surface adjustment step of moving a group of vertices and/or a group of faces of the universal archetype avatar to positions corresponding to a group of vertices and/or a group of faces that represent the three-dimensional surface shape of the object based on correspondence between the group of vertices and/or the group of faces that represent the three-dimensional surface shape of the object and the group of vertices and/or the group of faces that represent the three-dimensional surface shape of the universal archetype avatar subjected to the positional adjustment of the skeletal structure; and an image addition step of adding an image obtained by processing the captured image data of the object to a surface of the universal archetype avatar on which the positional movement of the group of vertices and/or the group of faces is performed at the surface adjustment step.

To achieve the object described above, in a three-dimensional avatar generation program according to claim 10 in the above invention, the universal archetype avatar defines motion information that is information on positional change of the entire skeletal structure and an interlocking state between the components of the skeletal structure in a motion, shape transition information that defines a transition state of the group of vertices when shifting from a first shape to a second shape in at least a partial region of the three-dimensional surface shape, and information on the group of vertices that represents an internal shape, and the group of vertices that represents the internal shape is not a target of the positional movement at the surface adjustment step.

To achieve the object described above, a three-dimensional avatar generation program according to claim 11 in the above invention further includes: a surface region determination step of determining a skin-exposed region, a clothing region, and a hair region in the three-dimensional surface shape based on the captured image data of the object; a basic body shape generation step of generating a surface shape of a basic body shape by removing a clothing part from the clothing region determined at the surface region determination step; and a shape transition step of changing the surface shape of the universal archetype avatar so as to be consistent with the basic body shape based on the shape transition information, surface adjustment is not performed on at least the clothing region and the hair region at the surface adjustment step, and a three-dimensional avatar not having information on clothing and hair of the captured image data of the object is generated.

To achieve the object described above, a three-dimensional avatar generation program according to claim 12 in the above invention further includes: a clothing region extraction step of extracting a surface structure positioned in the clothing region on the three-dimensional surface shape based on the captured image data of the object; a clothing archetype generation step of converting an extracted part into a three-dimensional clothing archetype; an archetype connection step of connecting the clothing archetype to the three-dimensional avatar based on the captured image data; a universal shaping step of changing the shape of the three-dimensional avatar and the clothing archetype that are connected so as to match a three-dimensional surface shape of the universal archetype avatar based on the shape transition information; an information transfer step of transferring information on the relevance between the three-dimensional surface shape and the skeletal structure of the universal archetype avatar and the shape transition information to the clothing archetype the shape of which is changed; and a connection cancellation step of canceling the connection of the clothing archetype with the three-dimensional avatar after the information is transferred at the information transfer step.

### Advantageous Effects of Invention

The present invention can generate high-quality three-dimensional computer graphics based on live captured images in a simpler manner.

### Brief Description of Drawings

Fig. 1 is a schematic of the configuration of a three-dimensional avatar generation device according to a first embodiment.
Fig. 2 is a flowchart of the operations performed by the three-dimensional avatar generation device according to the first embodiment.
Fig. 3 is a schematic of the configuration of the three-dimensional avatar generation device according to a second embodiment.
Fig. 4 is a flowchart of the operations performed by the three-dimensional avatar generation device according to the second embodiment.
Fig. 5 is a schematic of the configuration of the three-dimensional avatar generation device according to a third embodiment.
Fig. 6 is a flowchart of the operations performed by the three-dimensional avatar generation device according to the third embodiment.
Fig. 7 is a schematic of the configuration of the three-dimensional avatar generation device according to a modification.
Fig. 8 is a schematic of the configuration of the three-dimensional avatar generation device according to a fourth embodiment.
Fig. 9 is a flowchart of the operations performed by the three-dimensional avatar generation device according to the fourth embodiment.

### Description of Embodiments

Embodiments according to the present invention are described below in greater detail with reference to the drawings. The embodiments below describe examples considered to be most appropriate as the embodiments of the present invention. Naturally, the contents of the present invention should not be interpreted as limited to the specific examples provided as the embodiments. It is a matter of course that any configuration other than the specific configuration provided in the embodiments be included in the technical scope of the present invention as long as it has similar advantageous effects.

### (First Embodiment)

A three-dimensional avatar generation device according to a first embodiment is described first. The three-dimensional avatar generation device according to the first embodiment is designed to generate a three-dimensional avatar of an object by using a universal archetype that records basic information as three-dimensional computer graphics based on captured image data obtained by photographing the object.

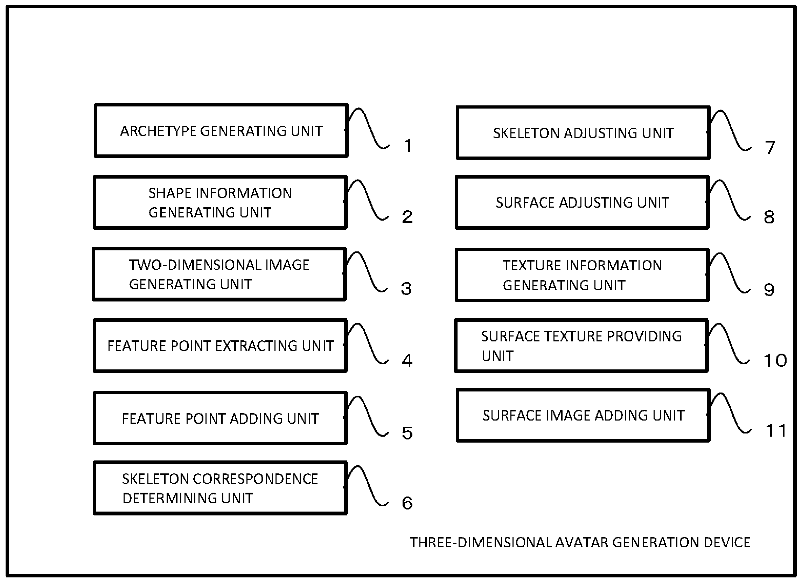

Fig. 1 is a schematic of the configuration of the first embodiment. As illustrated in Fig. 1, the three-dimensional avatar generation device according to the first embodiment includes an archetype generating unit 1, a shape information generating unit 2, a two-dimensional image generating unit 3, a feature point extracting unit 4, a feature point adding unit 5, a skeleton correspondence determining unit 6, a skeleton adjusting unit 7, a surface adjusting unit 8, a texture information generating unit 9, a surface texture providing unit 10, and a surface image adding unit 11. The archetype generating unit 1 generates a universal archetype. The shape information generating unit 2 generates three-dimensional surface shape information on the surface shape of an object, such as a person, for which a three-dimensional avatar is to be generated based on captured image data of the object. The two-dimensional image generating unit 3 converts the three-dimensional shape information into a two-dimensional image. The feature point extracting unit 4 extracts feature points from the two-dimensional image. The feature point adding unit 5 adds the extracted feature points to the three-dimensional surface shape information. The skeleton correspondence determining unit 6 determines the correspondence between the feature points added to the three-dimensional surface shape information and a skeletal structure of the universal archetype. The skeleton adjusting unit 7 adjusts the three-dimensional distribution of the skeletal structure of the universal archetype so as to match the three-dimensional distribution of the feature points. The surface adjusting unit 8 adjusts the surface shape of the universal archetype so as to match the three-dimensional shape of the surface of the object included in the three-dimensional shape information. The texture information generating unit 9 generates information on texture of the surface of the object based on the three-dimensional image data of the object. The surface texture providing unit 10 adds texture expression to the surface of the universal archetype based on the texture information. The surface image adding unit 11 adds image information generated from the captured image data of the object to the surface of the universal archetype.

The archetype generating unit 1 generates a universal archetype serving as material for generating a three-dimensional avatar of an object. The universal archetype is three-dimensional computer graphics information on a person having an average body type, for example. Specifically, the three-dimensional computer graphics information includes at least three-dimensional shape information on a three-dimensional surface shape, skeletal information on a skeletal structure for controlling motions and the like, relevance information on the relevance between the surface shape and the skeletal structure, and two-dimensional mapping information obtained by two-dimensionally developing the surface of the three-dimensional surface shape. The archetype generating unit 1 has a function of generating these pieces of information to generate a universal archetype with no individuality in body type, appearance, and other parts.

The surface shape information is information on the surface shape of three-dimensional computer graphics corresponding to the shape of the skin and the like of a human body. The information may have a form in which the entire surface is defined as a set of micro units, such as voxels, and positional information on each micro unit is recorded. To reduce the load in information processing, the information preferably has a form in which the three-dimensional shape of the surface is represented by performing what is called modeling and defining a predetermined number of vertices and the connection state between them. If modeling is performed, edges connecting the vertices are formed based on the information on the vertices and the connection state between them, the region surrounded by three or more edges is defined as a face (polygon), and the surface shape is identified by a set of faces (mesh).

The present invention is not necessarily applied to the information forms described above. Any shape information can be used as the surface shape information according to the present invention as long as it includes positional information on a plurality of vertices and/or a plurality of faces arranged correspondingly to the surface shape. Some of the vertices included in the surface shape information are provided not only with the positional information and the information on the connection state between the vertices but also with information on the semantic contents of them. Vertices serving as feature points corresponding to specific points in body parts, such as the eye, nose, and mouth, and detailed positional relation in the body parts (e.g., outer corner of the eye, pupil, nose tip, and corner of the mouth) are provided with the information that the vertex corresponds to the outer corner of the right eye, for example. The positional information on the vertex preferably includes either information on the absolute position or information on the relative position with respect to the skeletal structure composed of joints and bones. The positional information on the vertex according to the present embodiment includes not only the former positional information but also the latter. Each vertex changes its position while maintaining its relative positional relation according to changes in the position of the joint and the position and length of the bone, for example.

The skeletal information is information on the internal structure used as a reference to create motions in three-dimensional computer graphics, which corresponds to the skeleton or the like of the human body. The information may have a form represented by a skeletal structure composed of bones and joints having a predetermined thickness and size similar to the skeletal structure or the like of the human body. The information preferably has a form represented by a set of joints (represented as points) corresponding to the joints or the like of the human body and bones (represented as lines) positioned between the joints and corresponding to the bones of the human body, which is referred to as what is called a skeleton. The present invention is not necessarily applied to these information forms. The information may have another form as long as it includes information on parts, such as joints, that can parallelly and rotatably move and that also function as fulcrums with respect to adjacent parts (which are collectively referred to as "joints" in the present invention) and on parts, such as bones, that can only parallelly and rotatably move (which are collectively referred to as "bones").

The relevance information is information that defines the relevance between the skeletal information and the surface shape information. More specifically, it is information that defines how much the vertices that form the surface shape follow the motions of the joints and bones included in the skeletal structure. If the surface shape follows the motions of the joints and bones a hundred percent, the character moves like a tin robot, although it is a character of a human or the like, and lacks a sense of reality. To address this, it is preferable to set in advance information indicating how much each part of the surface shape follows the movement of the adjacent bones and joints to generate three-dimensional computer graphics of a person or the like. The present embodiment sets numerical information indicating the followability of the vertices constituting the surface shape information to the adjacent bones and/or joints as the relevance information. The process of generating the relevance information is referred to as skinning, weight editing, and the like, and weight values are typically used for the relevance information. The relevance information according to the present invention is not limited thereto and includes all the information satisfying the conditions described above.

The two-dimensional mapping information is information obtained by converting the positional information on the vertices constituting the surface shape of the universal archetype into a two-dimensional coordinate system and illustrating it, just as the topography of the world on a sphere is converted into a two-dimensional world map. The two-dimensional mapping information is information representing the surface shape of a three-dimensional structure on a two-dimensional coordinate system for the convenience in creating the texture, detailed pattern, and the like on the surface. While two-dimensional mapping is typically carried out by UV unwrapping, the two-dimensional mapping information according to the present invention is not limited to that obtained by UV unwrapping and includes all the information satisfying the conditions described above.

Next, the shape information generating unit 2 is described. The shape information generating unit 2 generates three-dimensional surface shape information serving as information on the surface shape of an object based on captured image data of the object. Similarly to the information generated by the archetype generating unit 1, the surface shape information generated by the shape information generating unit 2 is information including the positional information on a plurality of vertices arranged correspondingly to the surface shape. The surface shape information is generated by automatically or semi-automatically analyzing three-dimensional image data.

The two-dimensional image generating unit 3 generates a two-dimensional image based on the three-dimensional surface shape information generated based on the captured image data of the object. While two-dimensional mapping information may be generated as the two-dimensional image like the archetype generating unit 1, the two-dimensional image generating unit 3 according to the present embodiment generates the two-dimensional image by projecting the three-dimensional surface shape information in one direction. More specifically, for the convenience in feature point extraction by the feature point extracting unit 4, which will be described later, it is preferable to project the three-dimensional surface shape information on the front image of a person or the like, that is, in the normal direction of the face of the person or the like (direction orthogonal to the direction of the straight line connecting the outer corners of the eyes and the direction in which the person or the like stands upright). The two-dimensional image may be generated by projection in another direction as long as it can define the shapes of the facial structure and the torso part to some extent. Alternatively, two two-dimensional images may be generated by projection not in one direction but in two different directions.

The feature point extracting unit 4 analyzes the positions of feature points on the face and the skeletal structure based on the two-dimensional shape information generated by the two-dimensional image generating unit 3. The feature point extracting unit 4 determines the positions of the feature points on the internal structure of the target person, for example, indicating the joints of the neck, shoulders, elbows, wrists, fingertips, waist, knees, ankles, and other parts, and determines the positions of the feature points on the outer surface indicating the eyes, nose, mouth, ears, and other parts on the face by using a two-dimensional image analysis technology, such as a posture estimation technology. The feature point extracting unit 4 may be specifically configured to use another image recognition technology achieved by deep learning or machine learning, for example, or use a combination of a plurality of image recognition technologies. The feature points may be analyzed using not only one two-dimensional image obtained by projection in one direction but also other two-dimensional images obtained by projection in different directions as the two-dimensional image to be determined.

The feature point adding unit 5 adds information on the feature points extracted by the feature point extracting unit 4 to the three-dimensional surface shape information on the surface shape of the object. The feature point adding unit 5 according to the present embodiment has a function of adding information on the position and the property of the feature point (e.g., the point corresponds to the outer corner of the eye, and the point corresponds to the knee joint) as the information on the feature point.

For example, the direction normal to the face of the person or the like in the three-dimensional image data is defined as a Z-axis, and two axes orthogonal thereto (e.g., the direction in which the person stands upright and the direction of the straight line connecting the outer corners of the eyes) are defined as an X-axis and a Y-axis. By defining the directions as described above, the X- and Y-coordinates of the feature point specified in the two-dimensional image serving as a projection in the positive direction of the Z-axis correspond to the X- and Y-coordinates in the three-dimensional image data without any change.

If a feature point is positioned on the outer surface of the three-dimensional surface shape (e.g., a feature point on the face), the Z-coordinate of the feature point is the same value as the Z-coordinate of the point positioned in the projection direction out of the points (two points) on the outer surface positioned at the X- and Y-coordinates. Based on this principle, the feature point adding unit 5 adds not only the X- and Y-coordinates in the two-dimensional image but also the Z-coordinate of the point on the three-dimensional outer surface shape positioned at the X- and Y-coordinates as the positional information for the position of the feature point on the outer surface.

When the Z-coordinates of the points (two points) on the outer surface positioned at the X- and Y-coordinates are Z1 and Z2 (Z1 < Z2), the Z-coordinate of a feature point on the internal structure indicating a joint, for example, is expressed as Z1 < Z < Z2. To simply identify the position, for example, the feature point adding unit 5 determines the Z-coordinate to be the midpoint ((Z1 + Z2)/2) of the points (two points) on the outer surface. If there is information, such as statistical data, on the Z-coordinate of a specific feature point, the Z-coordinate may be expressed as (aZ1 + bZ2)/(a + b) (a and b are constants derived from the statistical data or other data) according to the information. If the feature point extracting unit 4 analyzes the position of the feature point using a plurality of two-dimensional images in different projection directions, for example, the Z-coordinate of the feature point can be specifically grasped by analyzing the two-dimensional image obtained by projection in the Y-axis direction, which is a direction orthogonal to the Z-axis direction. As described above, the positional information on the feature point may be converted into three-dimensional information by analyzing a plurality of two-dimensional images.

The skeleton correspondence determining unit 6 determines the correspondence between the feature points on the internal structure out of the feature points provided with the three-dimensional positional information and the skeletal structure, that is, the joints and bones in the universal archetype. Specifically, the skeleton correspondence determining unit 6 compares the positions of the feature points with respect to the entire three-dimensional surface shape of the object with the positions of the joints and bones with respect to the entire surface shape in the universal archetype. Thus, the skeleton correspondence determining unit 6 determines the component of the skeletal structure in the universal archetype to which the feature point relating to a certain internal structure corresponds.

If the feature point corresponding to the component of the skeletal structure in the universal archetype is not extracted, the skeleton correspondence determining unit 6 estimates the presence and the position of the corresponding feature point. If the feature point extracting unit 4 extracts the feature point corresponding to the left knee but does not extract the feature point corresponding to the right knee, for example, the skeleton correspondence determining unit 6 extracts the feature point corresponding to the right knee in the three-dimensional surface shape of the object using the fact that the human body is symmetrical in the skeletal structure. Subsequently, the skeleton correspondence determining unit 6 determines the correspondence with the skeletal structure in the universal archetype. Specifically, in the case of the feature point positioned away from the median line of the human body, such as the right knee, the skeleton correspondence determining unit 6 determines the position in the three-dimensional surface shape by assuming that the feature point is positioned symmetrically with the left knee with respect to the median line.

The skeleton adjusting unit 7 adjusts the positions of the joints and bones constituting the skeletal information on the universal archetype so as to be consistent with the distribution of the feature points relating to the internal structure extracted by the feature point extracting unit 4 while maintaining the connection relation between the components, such as the joints and bones. The skeleton adjusting unit 7 determines the joints and bones in the archetype corresponding to the feature points relating to the internal structure of the surface shape information on the object and converts the positional information on the joints and bones into the same positional information as that of the corresponding feature points. The skeleton adjusting unit 7 changes the positions of the joints and bones for which the correspondence with the feature points relating to the internal structure of the surface shape information on the object is not determined according to changes in the positions of the joints and bones for which the correspondence is determined while maintaining the connection relation between the joints and bones in a reference archetype. Let us assume a case where the feature point extracting unit 4 extracts the feature points on the internal structure corresponding to the right shoulder and the right hand tip but does not extract the feature point corresponding to the right elbow, for example. In this case, the skeleton adjusting unit 7 converts the positional information on the joints corresponding to the right shoulder and the right hand tip into the positional information on the corresponding feature points. In addition, the skeleton adjusting unit 7 converts the positional information on the joint corresponding to the right elbow positioned between them so as to maintain the internal ratio to the right shoulder and the right hand tip.

Specifically, the skeleton adjusting unit 7 compares the information on the feature points relating to the internal structure extracted by the feature point extracting unit 4 and converted into the three-dimensional positional information by the feature point adding unit 5 with the skeletal information on the universal archetype. The skeleton adjusting unit 7 derives the correspondence between them, that is, the relevance that specific feature points A, B, C, ... relating to the internal structure correspond to joints 1, 2, 3, ..., respectively, constituting the skeletal information on the universal archetype. The skeleton adjusting unit 7 then moves the position of the skeletal structure in the universal archetype so that the positional relation of the skeletal structure in the universal archetype matches the positional relation of the feature points relating to the internal structure. In the example described above, the skeleton adjusting unit 7 moves the positions of the joint 1 (x₁,y₁,z₁), the position of the joint 2 (x₂,y₂,z₂), ... in the universal archetype to the positions of the feature point A (X_{A},Y_{A},Z_{A}), the position of the feature point B (X_{B},Y_{B},Z_{B}), ..., respectively. As the joints move, the position and the shape (length) of the bone formed between the joints also change. Furthermore, the positions of the vertices that hold the information on the relative positional relation with the joints and bones and that form the information on the surface shape of the universal archetype also change according to the movement of the joints.

If there are feature points that fail to be extracted by the feature point extracting unit 4, the skeleton adjusting unit 7 adjusts the positions of the joints and bones so as to be consistent with the distribution of the extracted feature points without deleting the joints and bones not having the corresponding feature points and while maintaining the connection relation between the joints and bones. With these functions, the skeleton adjusting unit 7 converts the positions of the joints and bones without compromising the functions of the universal archetype as computer graphics.

By the processing performed by the skeleton adjusting unit 7 described above, the universal archetype is changed into contents that substantially match the three-dimensional image data of the object in the parts attributed to the skeletal structure, such as the lengths of the arm, the leg, and the torso, and the width of the shoulders.

The surface adjusting unit 8 changes the positions of the vertices and/or the faces constituting the surface shape of the universal archetype the position of the skeletal structure of which is adjusted by the skeleton adjusting unit 7 to make the surface shape of the universal archetype identical to the outer surface shape based on the three-dimensional image data of the object.

Specifically, the surface adjusting unit 8 first compares the vertices constituting the surface shape of the universal archetype with the respective vertices included in the shape information generated by the shape information generating unit 2 based on the three-dimensional image data of the target person or the like. The surface adjusting unit 8 derives the correspondence that vertices α, β, γ, ... of the universal archetype correspond to vertices a, b, c, ..., respectively, included in the surface shape based on the three-dimensional image data. Subsequently, the surface adjusting unit 8 moves the position of the vertices included in the surface shape information on the universal archetype so that the positional relation of the vertices included in the surface shape information on the universal archetype matches the positional relation of the corresponding vertices in the outer surface shape of the object. In the example described above, the surface adjusting unit 8 moves the position of the vertex α (x_{α},y_{α},z_{α}), the position of the vertex β (x_{β},y_{β},z_{β}) ... of the universal archetype to the position of the vertex a (Xₐ,Yₐ,Zₐ), the position of the vertex b (X_{b},Y_{b},Z_{b}), ..., respectively, of the outer surface shape based on the three-dimensional image data. As the vertices move, the position and the shape of edges connecting the vertices, faces (polygons) composed of three or more edges, and a set of faces (mesh) also change.

To derive the correspondence between the vertices, the first embodiment uses the following method. First, the universal archetype and the surface shape information based on the three-dimensional image data are arranged on the same space so as to match the positional relation of the skeletal structure. Next, the faces (polygons) of the surface shape based on the three-dimensional image data positioned in the normal direction are derived for each of the faces (polygons) constituting the surface shape of the universal archetype, and the closest one is identified as the corresponding face. Then, the vertex closest to the vertex constituting the face in the universal archetype out of the vertices constituting the corresponding face is identified as the corresponding vertex, and this processing is performed on all the vertices.

If the correspondence with the vertices constituting the surface shape of the object fails to be determined for some of the vertices constituting the surface shape of the universal archetype, some of the vertices are moved while maintaining their mutual positional relation according to the movement of the surrounding vertices. By the processing performed by the surface adjusting unit 8 described above, the universal archetype is changed into contents that substantially match the three-dimensional image data of the object in the three-dimensional surface shape.

Not only the method of moving the vertices but also the method of adjusting the positions of the faces is effectively used for the processing performed by the surface adjusting unit 8. For example, the faces (polygons) of the surface shape based on the three-dimensional image data of the object positioned in the normal direction are derived for each of the faces (polygons) constituting the surface shape of the universal archetype, and the closest one is identified as the corresponding face. Subsequently, the face constituting the surface shape of the universal archetype is moved to the position of the corresponding face and is rotated such that the direction of the face matches that of the corresponding face. By the processing described above, the universal archetype can be changed so as to substantially match the three-dimensional image data of the object in the three-dimensional surface shape.

In the first embodiment, the relevance information that defines the relevance between the skeletal information and the surface shape information is maintained without any change by the processing performed by the surface adjusting unit 8. The relevance information is information indicating the relevance between the joints and bones included in the skeletal structure and the vertices constituting the surface shape. The joints, bones, and vertices only move in position so as to match the three-dimensional image data and do not lose their respective identities. Therefore, the relevance information indicating the correlation between them does not change.

When the processing by the surface adjusting unit 8 is completed, the universal archetype maintains all the skeletal structure, the three-dimensional surface shape, and the relevance information between the skeletal structure and the surface shape. At the same time, the three-dimensional computer graphics are generated, which are consistent with the positions of the feature points on the internal structure of the object in the skeletal structure, substantially match the object in the surface shape, and include the complete relevance information between the surface shape and the skeletal structure.

The texture information generating unit 9 generates texture information on the texture of the outer surface based on the three-dimensional image data about the outer surface generated by photographing the person or the like for which the three-dimensional avatar is to be generated. The texture is also referred to as texture or other terms and indicates external appearance characteristics composed of minute recesses, protrusions, and the like on the outer surface. Typically, by modeling in the three-dimensional CG, edges connecting the vertices are formed on the outer surface based on the information on the vertices and the connection state between them, the region surrounded by three or more edges is defined as a face (polygon), and the surface shape is identified by a set of faces (mesh). This method is an approximate representation of the realistic surface shape and does not include the information on the texture composed of minute recesses, protrusions, and the like on the surface. Therefore, the information on the texture is separately created and is added to the outer surface formed by modeling to create a realistic appearance. Specifically, the information on the texture is information on a secondary image added to the outer surface. By forming a pattern reflecting light and shade and the like, such as a height map or a normal map, on a two-dimensional plane, recesses, protrusions, and the like are simulatively represented.

Theoretically, the texture information can be generated directly on the three-dimensional surface shape. The first embodiment, however, uses two-dimensional mapping information that two-dimensionally represents the three-dimensional surface shape. The first embodiment generates the texture on the two-dimensional mapping or uses the texture information prepared for the universal archetype in advance on the two-dimensional mapping.

The surface texture providing unit 10 provides texture to the surface of the universal archetype subjected to the skeletal adjustment and the surface adjustment. By adding the texture information generated by the texture information generating unit 9 to the surface of the universal archetype, the texture composed of minute recesses, protrusions, and the like can be reproduced on the universal archetype composed of the surface generated by modeling. The first embodiment adds the texture information by reconverting the two-dimensional structure of the texture information generated on the two-dimensional mapping of the universal archetype into the three-dimensional structure. The surface shape of the universal archetype is changed into the surface shape of the object by moving the vertices by the surface adjusting unit 8, and the identities of the vertices are maintained before and after the processing. Therefore, the texture information can be automatically provided by associating the positions of the vertices on the two-dimensional mapping with the positions after the movement by the surface adjusting unit 8.

The surface image adding unit 11 adds a surface image composed of pattern, color, and the like of the outer surface included in the three-dimensional image data of the target person or the like to the surface of the universal archetype subjected to the skeletal adjustment and the surface adjustment. The surface shape of the universal archetype subjected to the surface adjustment matches the outer surface of the three-dimensional image data in the shape face. The surface image adding unit 11 has a function of appropriately processing the surface image included in the three-dimensional image data as necessary and pasting it onto the surface of the universal archetype having the same shape. The first embodiment adds the surface image by projecting RGB images captured by a plurality of cameras that take images to acquire the three-dimensional image data from the installation positions of the cameras by simulative projection mapping.

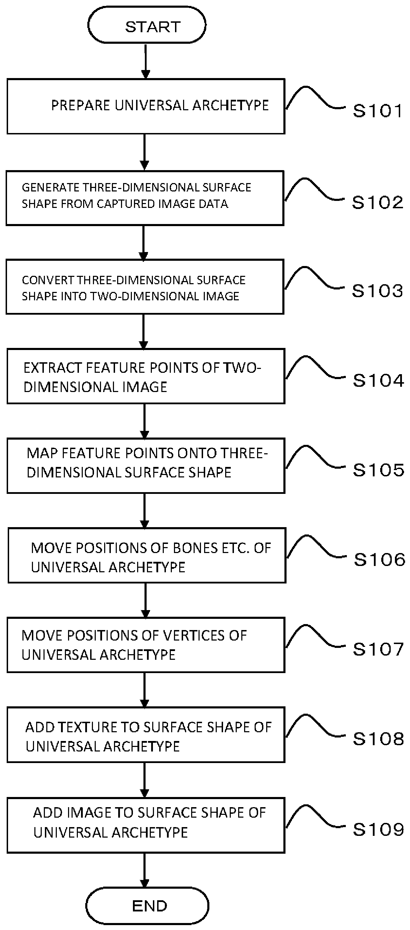

The following describes the process of operations performed by the three-dimensional avatar generation device according to the first embodiment with reference to Fig. 2. First, the archetype generating unit 1 prepares a universal archetype with information indicating the surface shape, the skeletal structure, and the relevance between them (Step S101). Independently of this, the shape information generating unit 2 generates the three-dimensional surface shape information based on the captured image data of the object (Step S102). A two-dimensional image is generated based on the generated three-dimensional surface shape information (Step S103). After feature points are extracted from the two-dimensional image (Step S104), the extracted feature points are mapped onto appropriate positions on the surface or inside of the three-dimensional surface shape (Step S105).

Subsequently, the skeleton adjusting unit 7 moves the positions of the bones and joints of the universal archetype so as to be consistent with the positions of the corresponding feature points positioned inside the three-dimensional surface shape of the object (Step S106). Subsequently, the surface adjusting unit 8 compares the vertices and/or faces constituting the three-dimensional surface shape of the object with the vertices and/or faces constituting the three-dimensional surface shape of the universal archetype and moves the positions of the vertices and/or faces of the universal archetype so as to match the positions of the corresponding vertices and/or faces of the object (Step S107).

The texture information generated by the texture information generating unit 9 is provided to the surface shape of the universal archetype (Step S108). An image generated based on the captured image data of the object is added to the three-dimensional surface shape of the universal archetype (Step S109). Thus, a three-dimensional avatar that realistically represents the object is completed.

Finally, the advantages of the three-dimensional avatar generation device according to the first embodiment are described. First, the first embodiment generates the three-dimensional avatar of the object by preparing in advance the universal archetype having the information necessary for the configuration of the avatar (e.g., three-dimensional surface shape, skeletal structure, and relevance between them) and adjusting the skeletal structure of the universal archetype and the positional information on the three-dimensional surface shape so as to match the three-dimensional surface shape generated from the captured image data of the object. By employing this configuration, the first embodiment has the advantage that it can generate a high-definition three-dimensional avatar in a significantly simpler manner and shorter time than the conventional technology that manually constructs the skeletal structure and the relevance between the skeletal structure and the surface shape on the captured image data.

In the feature point extraction on the three-dimensional surface shape generated from the captured image data, the first embodiment converts the three-dimensional surface shape into a two-dimensional image once to extract the feature points and then projects the feature points onto the surface or inside of the three-dimensional surface shape. Research on the processing for analyzing a two-dimensional image, such as image recognition and posture estimation technologies, has been making progress. By employing the method according to the first embodiment, the feature points relating to the three-dimensional surface shape can be extracted with high accuracy. If the feature point extracting unit 4 fails to extract some feature points, the first embodiment has the advantage that it can appropriately estimate the presence of the feature points based on empirical rules, such as the symmetry of the human body.

Furthermore, when the skeleton adjusting unit 7 adjusts the skeletal structure of the universal archetype, the first embodiment adjusts the position of the skeletal structure of the universal archetype so as to be consistent with the distribution of the corresponding feature points in the three-dimensional surface shape of the object under the condition that the connection relation between the components of the skeletal structure, that is, between the joints and bones is maintained. With this configuration, the first embodiment has the advantage that it can generate, if only some of the feature points of the three-dimensional surface shape of the object can be extracted, the three-dimensional avatar with an appropriate skeletal structure in arrangement suitable for the three-dimensional surface shape of the object based on the extracted feature points.

### (Second Embodiment)

Next, the three-dimensional avatar generation device according to a second embodiment is described. Components according to the second embodiment denoted by the same name and the same reference numeral as those according to the first embodiment implement the same functions as those according to the first embodiment, unless otherwise noted.

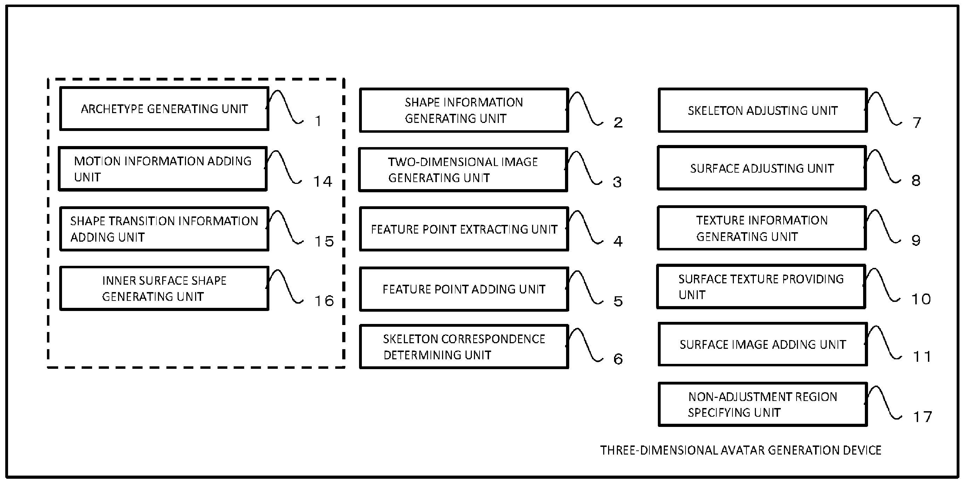

As illustrated in Fig. 3, the three-dimensional avatar generation device according to the second embodiment further includes a motion information adding unit 14, a shape transition information adding unit 15, an inner surface shape generating unit 16, and a non-adjustment region specifying unit 17 besides the components according to the first embodiment. The motion information adding unit 14 adds motion information on a motion of the skeletal structure to the universal archetype. The shape transition information adding unit 15 adds shape transition information on a change in the three-dimensional surface shape to the universal archetype. The inner surface shape generating unit 16 adds the surface shape of an inner surface hard to appear on the outer surface in the three-dimensional surface shape to the universal archetype. The non-adjustment region specifying unit 17 specifies a vertex not to be the target of positional movement by the surface adjusting unit 8 out of the vertices of the surface shape of the universal archetype.

The motion information adding unit 14 generates motion information on positional change in a motion and an interlocking state between the joints and bones in the skeletal structure of the universal archetype generated by the archetype generating unit 1 and adds it to the universal archetype. Specifically, the motion information defines the direction and the range of bending at each joint and the direction and the range of rotation at each joint and/or bone, and a specific interlocking state between a plurality of joints and bones in a motion. The information on the interlocking state includes information that defines how the bones and joints connected to a certain joint interlock and move when the certain joint moves in a predetermined motion, such as what is called Inverse Kinematics configuration information and Forward Kinematics configuration information.

The motion information is used to move the universal archetype with the skeletal structure in animation or the like. To cause the universal archetype to perform an animation motion without the motion information, it is necessary to manually specify the positions of all the joints and bones in each frame of the animation, for example, which is significantly complicated. The second embodiment adds the motion information in advance. When the universal archetype performs a motion of "reaching out its right hand to pick up an apple on a table", for example, the second embodiment simply needs to specify temporal change in the position of the joint at the right hand tip (temporal change relating to movement from the regular position to the apple). As a result, the second embodiment can substantially automatically specify the positional changes of the joints, such as the right wrist, the right elbow, and the right shoulder, relating to the joint and the positional changes of the bones between them and can cause the universal archetype to perform a natural animation motion.

The shape transition information adding unit 15 generates shape transition information and adds it to the universal archetype. The shape transition information is information on a change in the surface shape and specifically includes the positional information on the vertices used to form a first shape and a second shape in a partial region on the surface shape and information on positional changes of the vertices when shifting from the first shape to the second shape.

The surface shape of the universal archetype is defined by the vertices and the connection state between the vertices. Therefore, the first shape and the second shape in a predetermined range are also defined by the positional information and the like on the vertices positioned in the range. In the shape transition information, each vertex is provided with specific positional information in the first shape and specific positional information in the second shape, and the path of movement of each vertex in transition from the first shape to the second shape is also defined. To define the path of movement, a function with a variable t is set such that the vertex is at the position corresponding to the first shape when variable t = 0 is satisfied, the vertex is at the position corresponding to the second shape when t = 1 is satisfied, and the vertex is at a predetermined position between the position in the first shape and the position in the second shape when 0 < t < 1 is satisfied, for example.

In the region corresponding to the "eye" on the face, for example, the first shape corresponds to "a state where the eyelid is closed", and the second shape corresponds to "a state where the eye is opened". The shape transition information adding unit 15 adds the shape transition information composed of the positional information on the shapes and transition between the shapes to the vertices in the region corresponding to "eye," for example, in the surface shape of the universal archetype. By appropriately adjusting the variable t in an animation motion, "blinking" can be expressed. In the regions corresponding to the "outer corners of the eyes" and the "corners of the mouth" on the face, the first shape corresponds to "a state where the outer corners of the eyes are raised" and "a state where the corners of the mouth are lowered", and the second shape corresponds to "a state where the outer corners of the eyes are lowered" and "a state where the corners of the mouth are raised". By making transition from the first shape to the second shape, a motion of "smiling" can be expressed.

By changing the shapes of the hand, foot, and torso instead of the shape of the face, a change in body shape can be expressed in an animation motion. As described above, by specifying a predetermined region according to the expression mode and specifying the positions of the vertices in the region using a predetermined variable for the first and the second shapes and the intermediate shape, a smooth and natural animation motion is achieved by controlling the value of the variable.

While the embodiment above describes an example where the shape is changed using a single variable t for the convenience of explanation, the shape transition information is not necessarily composed of only a single variable. The shape transition information may be composed of two or more variables, and separate and independent variables may be set according to the characteristics of a plurality of kinds of the first and the second shapes.

The inner surface shape generating unit 16 generates the shape of the inner surface that does not appear on the outer surface on the universal archetype. The inner surface is a part of the surface structure that is continuously connected to the outer surface but usually cannot be recognized from the outside. The inner surface is a part corresponding to the oral cavity (part that can be seen when the mouth is opened), the nasal cavity, or the orbit (structural part under the eyelid), for example. Let us assume a case where a motion of opening and closing the mouth is performed by the shape transition information adding unit 15 appropriately selecting the first and the second shapes, for example. In this case, the inner surface shape generating unit 16 constructs the inner surface shape on the universal archetype, thereby enabling the inner surface shape of the oral cavity to be displayed when the mouth is opened and achieving natural image expression.

The non-adjustment region specifying unit 17 specifies a region in the surface shape of the universal archetype not to be the target of adjustment by the surface adjusting unit 8. As described in the first embodiment, the surface adjusting unit 8 performs processing of associating the vertices constituting the surface shape of the universal archetype with the respective vertices constituting the three-dimensional surface shape of the object and then moving the vertices to the positions of the corresponding vertices. The three-dimensional shape of the object, however, is provided with the information on only the outer surface because it is composed of captured image information and the like. The vertices on the inner surface, such as the oral cavity when the mouth is closed, should not be the target of adjustment by the surface adjusting unit 8 because they have no corresponding vertices on the three-dimensional surface shape of the object. The non-adjustment region specifying unit 17 has a function of specifying the vertices in the region that should not be the target of adjustment and excluding them from the target of adjustment by the surface adjusting unit 8. Although the vertices are not adjusted by the surface adjusting unit 8, they are changed in shape according to the positional changes of the corresponding bones and joints in the adjustment by the skeleton adjusting unit 7 similarly to the other vertices. After the adjustment by the surface adjusting unit 8, the vertices on the inner surface are also moved or interpolated so as to be consistent with the positional changes of the adjacent vertices in the specified range.

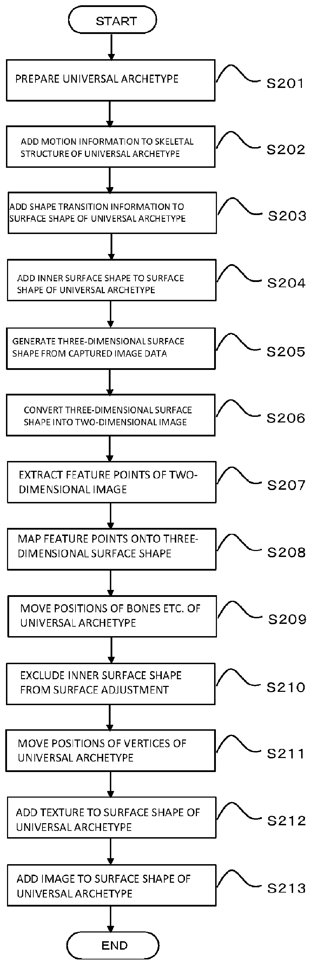

The following describes the operations performed by the three-dimensional avatar generation device according to the second embodiment with reference to Fig. 4. Similarly to the first embodiment, a universal archetype is prepared first (Step S201). The motion information is provided to the skeletal structure of the universal archetype (Step S202). The shape transition information is added to the three-dimensional surface shape of the universal archetype (Step S203). The inner surface shape is added to the surface shape (Step S204).

Subsequently, similarly to the first embodiment, the three-dimensional surface shape information is generated based on the captured image data of the object (Step S205). A two-dimensional image is generated based on the generated three-dimensional surface shape information (Step S206). After feature points are extracted from the two-dimensional image (Step S207), the extracted feature points are mapped onto appropriate positions on the surface or inside of the three-dimensional surface shape (Step S208). Subsequently, the skeleton adjusting unit 7 moves the positions of the bones and joints of the universal archetype so as to be consistent with the positions of the corresponding feature points positioned inside the three-dimensional surface shape of the object (Step S209).

The non-adjustment region specifying unit 17 excludes a region constituting the inner surface shape and the like from the target of surface adjustment (Step S210). Subsequently, similarly to the first embodiment, the surface adjusting unit 8 moves the positions of the vertices of the universal archetype so as to match the positions of the corresponding vertices of the object (Step S211). Subsequently, similarly to the first embodiment, the texture information is provided to the surface shape (Step S212). The captured image data of the object is added to the three-dimensional surface shape of the universal archetype (Step S213). Thus, a three-dimensional avatar of the object is completed.

Finally, the advantages of the three-dimensional avatar generation device according to the second embodiment are described. First, the second embodiment adds the motion information and the shape transition information to the universal archetype. With this configuration, the second embodiment has the advantage that it can achieve a natural animation motion of the generated three-dimensional avatar in a simpler manner. By adding the motion information, the second embodiment can determine natural positional changes of the wrist, elbow, shoulder, and other parts simply by specifying the positional change of the fingertip, for example. By adding the shape transition information, the second embodiment can achieve natural expression of a change in facial expression, such as blinking and smiling, and a change in body shape in a simpler manner.

In addition, the second embodiment excludes the inner surface and the like that do not appear in the three-dimensional surface shape of the object from the target to be adjusted in the surface adjustment by the surface adjusting unit 8. As described in the first embodiment, the surface adjusting unit 8 performs the surface adjustment by automatically deriving the correspondence between the vertices or between the faces. If the surface adjusting unit 8 performs the adjustment on the vertices and/or the faces constituting the inner surface, for example, the vertices and/or the faces may possibly establish correspondence with part of the outer surface or the like of the three-dimensional surface shape of the object that should not originally be in correspondence with them. To avoid such a situation, the second embodiment can exclude the inner surface shape that clearly cannot establish correspondence and the outer surface shape corresponding to a region that fails to be captured in the captured image data from the target of the surface adjustment. Therefore, the second embodiment has the advantage that it can prevent yielding inappropriate processing results while automatically performing the processing.

### (Third Embodiment)

Next, the three-dimensional avatar generation device according to a third embodiment is described. Components according to the third embodiment denoted by the same name and the same reference numeral as those according to the first and the second embodiments implement the same functions as those according to the first and the second embodiments, unless otherwise noted.

The three-dimensional avatar generation device according to the third embodiment prepares a universal archetype that does not define information on a hairstyle and clothing and generates a basic avatar that does not limit the hairstyle or the clothing for the object based on the universal archetype and the captured image data of the object.

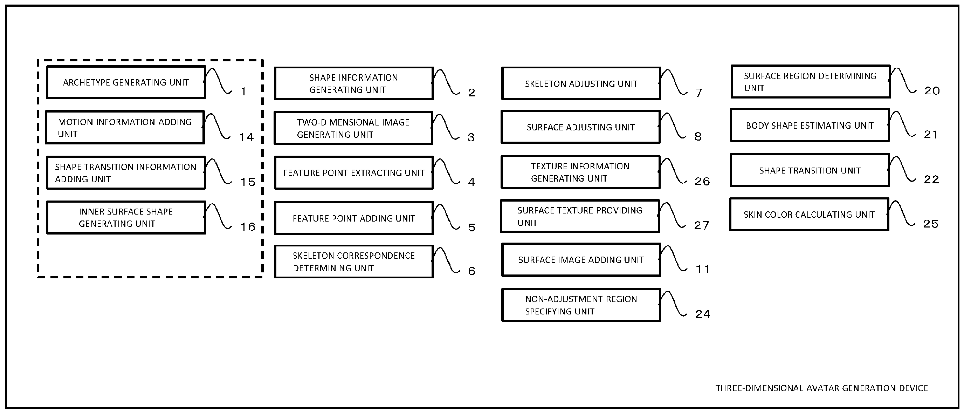

As illustrated in Fig. 5, the three-dimensional avatar generation device according to the third embodiment includes a surface region determining unit 20, a body shape estimating unit 21, a shape transition unit 22, a non-adjustment region specifying unit 24, a skin color calculating unit 25, a texture information generating unit 26, and a surface texture providing unit 27 besides the components according to the first and the second embodiments. The surface region determining unit 20 determines a skin-exposed region, a hair region, and a clothing region in the three-dimensional surface shape of the object. The body shape estimating unit 21 estimates a basic body shape obtained by removing clothing and the like in the clothing region of the object. The shape transition unit 22 adjusts the surface shape of the universal archetype so as to match the estimated basic body shape. The non-adjustment region specifying unit 24 excludes the clothing region, the hair region, and the inner surface shape from the target of surface adjustment. The skin color calculating unit 25 calculates the skin color of the object. The texture information generating unit 26 generates texture information on an avatar not provided with hair or clothing. The surface texture providing unit 27 provides texture to the entire surface of the avatar based on the generated texture information.

The surface region determining unit 20 determines a skin-exposed region in which the skin is exposed, a clothing region covered with decorations, such as clothes, and a hair region covered with hair by carrying out an analysis on the outer surface shape based on the three-dimensional image data of the person or the like. Specifically, the surface region determining unit 20 converts the three-dimensional image data into a two-dimensional image similarly to the two-dimensional image generating unit 3 and determines the skin-exposed region, the clothing region, and the hair region in the two-dimensional image by using a technology, such as semantic segmentation, on the two-dimensional image resulting from conversion. By performing the same processing as that performed by the feature point adding unit 5, the surface region determining unit 20 reproduces the boundaries of the two-dimensionally derived regions on the three-dimensional surface shape. Thus, the surface region determining unit 20 determines the skin-exposed region, the clothing region, and the hair region. In the processing performed by the surface region determining unit 20, it is preferable to use a plurality of images projected in a plurality of directions as the two-dimensional image.

The body shape estimating unit 21 estimates a basic body shape of the target person or the like obtained by removing decorations, such as clothes, in the clothing region. The three-dimensional image data of the target person or the like is usually captured with decorations, such as clothes, attached. Therefore, the basic body shape typically cannot be derived from the captured image data itself. For this reason, the third embodiment specifies the basic body shape by estimation performed by the body shape estimating unit 21.

Specifically, the body shape estimating unit 21 estimates the basic body shape of the target person or the like in the clothing region by estimating the structure of decorations, such as clothes, in the clothing region and then removing an estimated volume of the decorations. Specifically, the body shape estimating unit 21 performs a processing of reducing the volume of the clothing region according to the thickness of the clothes on most part of the region covered with the clothes. In addition, the body shape estimating unit 21 performs a processing of reducing the volume by the thickness obtained by multiplying the thickness of the clothes by a coefficient larger than 1 on the parts near the joints in the clothing region, such as the part around the neck, armpit, and crotch. This is because clothes are usually made in a generous size so as not to give a wearer a sense of tightness when bending the joints. For this reason, it is desirable to reduce a larger volume at the parts near the joints than at the other parts. It is also preferable to make a database of specific coefficient values in advance depending on the types of clothing or other factors.

The body shape estimating unit 21 may have a function of estimating the thickness of the clothes based on a change in shape near the boundary between the clothing region and the skin-exposed region, for example. The shape change near the boundary with the skin-exposed region is caused by the presence of decorations, such as clothes. For this reason, it is also preferable to estimate the thickness of the clothes under the assumption that an increase in volume in the clothing region due to the shape change is caused by the thickness of the clothes or the like.

The body shape estimating unit 21 may have a function of estimating the thickness of the clothes or the like by storing the relation between the color, texture, shape, pattern, and other properties of the decorations and the thickness of the decorations in a database or the like and referring to the database for the color tone, texture, and specific shape and pattern in the clothing region of the target person or the like. Specifically, if the clothes are assumed to be a winter coat based on the color tone and the texture, for example, the body shape estimating unit 21 may estimate the thickness of the clothes or the like to be the thickness of the coat and an average undershirt. If the clothes are assumed to be a T-shirt, the body shape estimating unit 21 may estimate the thickness of the clothes or the like to be the thickness of the T-shirt. In this manner, the body shape estimating unit 21 may estimate the basic body shape.

In addition, the body shape estimating unit 21 uses the information on the surface shape in the skin-exposed region for the part where the skin-exposed region and the clothing region are mixed, such as the part around the neck (part where the skin is not completely covered with decorations, such as clothes, but is partially exposed). Specifically, the basic body shape of the part around the neck has a substantially columnar shape around an inner joint (or bone corresponding to the spine). For this reason, it can be estimated that the basic body shape in the clothing region is formed by the surface of the substantial column the radius of which is the distance from the corresponding joint (or bone) to the surface of the skin-exposed region. Based on this estimation, the body shape estimating unit 21 derives the basic body shape at the part around the neck and other parts.

The shape transition unit 22 changes the surface shape of the universal archetype by using the shape transition information set in advance for the universal archetype. As described in the second embodiment, the shape transition information can be set to change the shapes of the hand, foot, torso, and other parts and defines a positional change of 0 ≤ t ≤ 1 for each of the vertices constituting the surface shape corresponding to the parts. By appropriately adjusting the variable t, the surface shape of the universal archetype is changed so as to match the basic body shape. The third embodiment changes the shape of the part for which the basic body shape is estimated in the clothing region not by the surface adjustment by the surface adjusting unit 8 but by adjustment of the shape transition information by the shape transition unit 22.

Theoretically, the shape transition can be performed only on the part corresponding to the clothing region, and the skin-exposed part can be adjusted by the surface adjusting unit 8 similarly to the first and the second embodiments. In the present embodiment, however, the basic body shape in the clothing region and the surface shape in the skin-exposed region are continuously formed. For this reason, it is less necessary to use different methods for the respective regions in adjusting the surface shape of the universal archetype. Therefore, the third embodiment causes the shape transition unit 22 to adjust the surface shape of the universal archetype for the parts other than the head that requires fine adjustment.

The non-adjustment region specifying unit 24 excludes the inner surface from the target of surface adjustment similarly to the non-adjustment region specifying unit 17 and also excludes the regions corresponding to the hair region and the clothing region from the target of surface adjustment. Based on the specification of the region by the non-adjustment region specifying unit 24, the surface adjusting unit 8 performs processing of making the vertices of the universal archetype identical to the respective vertices in the outer surface shape based on the three-dimensional image data of the target person or the like only on the part corresponding to the head in the outer surface in the skin-exposed region.

The skin color calculating unit 25 calculates the skin color of the target person. The color of the skin-exposed region in the captured image data of the target person or the like is not uniform and varies depending on the lighting conditions or other factors at the time of photographing. Therefore, the skin color calculating unit 25 obtains color information on the skin-exposed region and provides the texture information generating unit 26 with information on the skin color or the like at the parts obtained by removing the clothing and the hair in the clothing region and the hair region.

Besides the functions of the texture information generating unit 9, the texture information generating unit 26 also has a function of generating information on the surface texture when the surface shape in the clothing region and the hair region is replaced by the basic body shape and information on the skin color in these regions. An existing skin texture may be used as the surface texture when the surface shape is replaced by the basic body shape, or another skin texture may be generated based on the information on the skin-exposed region of the target person or the like. The information generated by the skin color calculating unit 25 is used as the information on the skin color.

Besides the functions of the surface texture providing unit 10, the surface texture providing unit 27 also has a function of providing the surface texture suitable for the basic body shape for the hair region and the clothing region when the surface shape in these regions is replaced by the basic body shape. The information generated by the texture information generating unit 26 is used as the information on the surface texture to be provided.

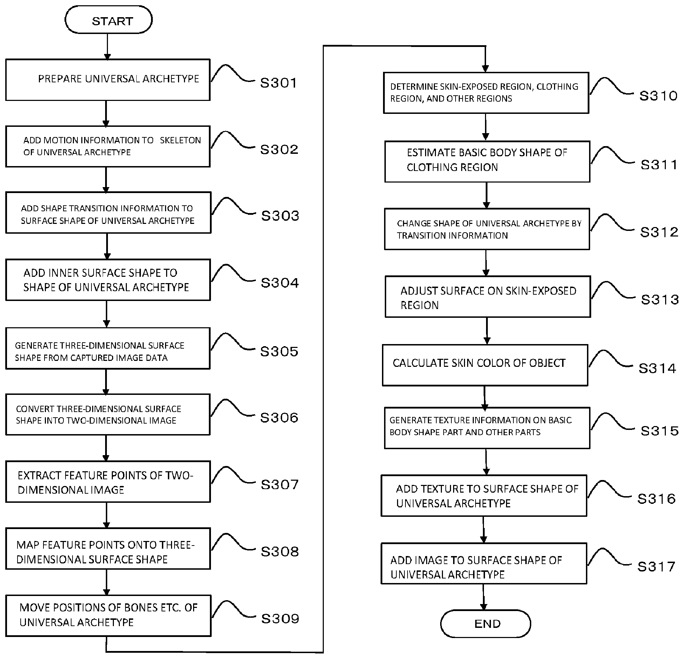

The following describes the operations performed by the three-dimensional avatar generation device according to the third embodiment with reference to Fig. 6. First, a universal archetype having no characteristics in the hair region and the clothing region is prepared (Step S301). Similarly to the second embodiment, the motion information is added to the skeletal structure of the universal archetype (Step S302). The shape transition information is added to the three-dimensional surface shape of the universal archetype (Step S303). The inner surface shape is added to the surface shape (Step S304). Subsequently, similarly to the first embodiment, three-dimensional surface shape information is generated based on captured image data of an object (Step S305). A two-dimensional image is generated based on the generated three-dimensional surface shape information (Step S306). After feature points are extracted from the two-dimensional image (Step S307), the extracted feature points are mapped onto appropriate positions on the surface or inside of the three-dimensional surface shape (Step S308). Subsequently, the skeleton adjusting unit 7 moves the positions of the bones and joints of the universal archetype so as to be consistent with the positions of the corresponding feature points positioned inside the three-dimensional surface shape of the object (Step S309).

Subsequently, the surface region determining unit 20 determines the skin-exposed region, the hair region, and the clothing region in the surface shape of the object (Step S310). The body shape estimating unit 21 performs estimation of the basic body shape on the clothing region (Step S311).

Subsequently, the shape transition unit 22 changes the three-dimensional surface shape of the universal archetype by appropriately adjusting the variable of the shape transition information set in advance so as to match the surface shape of the object replaced by the basic body shape in the clothing region (Step S312). By contrast, the surface adjusting unit 8 performs adjustment for the head such that the shape of the universal archetype matches the surface shape of the object on the parts obtained by excluding the inner surface shape and the hair region of the universal archetype, and the structure of the universal archetype is maintained without any change in the inner surface shape and the hair region (Step S313).

Subsequently, the skin color calculating unit 25 calculates the skin color of the target person or the like (Step S314). By using the calculated skin color, the texture information including the texture of the part replaced by the basic body shape is generated (Step S315). Subsequently, the surface texture providing unit 27 provides the texture information on the part replaced by the basic body shape and the texture information on the regions other than the clothing region to the surface shape of the universal archetype the surface shape of which is adjusted (Step S316). The surface image adding unit 11 adds an image to a part, such as the face, that requires the image (Step S317). Thus, a basic avatar of the target person or the like is generated.

Finally, the advantages of the three-dimensional avatar generation device according to the third embodiment are described. The third embodiment generates a basic avatar having characteristics, such as the face and the body type, of the object but maintaining the basic form of the universal archetype without any change in hairstyle and clothing.

In an example of using the three-dimensional avatar that faithfully reproduces the object, a hairstyle different from that of the actual object or clothing different from that worn at the time of photographing may possibly be set. The third embodiment separates the hairstyle and the clothing part from the basic avatar as separate objects. Therefore, the third embodiment has the advantage that it can set a hairstyle and clothing different from those in the captured image data on the basic avatar.

### (Modifications)

Relating to the functions of the three-dimensional avatar generation device according to the third embodiment, the three-dimensional avatar generation device according to the present modification extracts the hair of the target object or the like and decorations, such as clothes, worn by the target person or the like and generates archetype data composed of independent three-dimensional computer graphics.

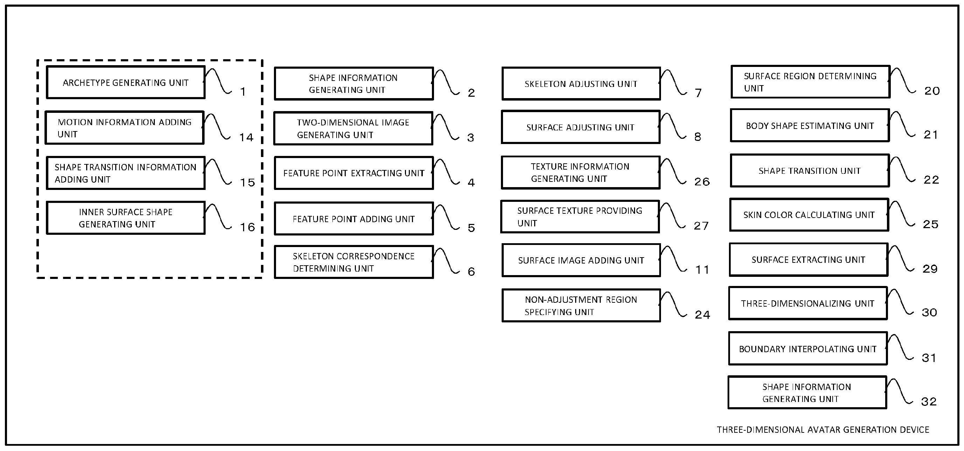

As illustrated in Fig. 7, the three-dimensional avatar generation device according to the present modification includes a surface extracting unit 29, a three-dimensionalizing unit 30, a boundary interpolating unit 31, and a shape information generating unit 32 besides the components of the three-dimensional avatar generation device according to the third embodiment. The surface extracting unit 29 extracts a surface part in the hair region and the clothing region from the three-dimensional surface shape of the object. The three-dimensionalizing unit 30 causes the extracted surface part to have a three-dimensional structure. The boundary interpolating unit 31 interpolates the boundary (edge) between the surface part and the structure added by the three-dimensionalizing unit 30. The shape information generating unit 32 reconstructs the surface shape information for the entire three-dimensional structure.

The surface extracting unit 29 extracts the surface part determined to be the hair region and the clothing region by the surface region determining unit 20. While the surface extracting unit 29 may have any specific configuration as long as it can perform the extraction described above, the surface extracting unit 29 according to the present modification extracts the surface part included in the hair region and the clothing region by what is called extraction.

The three-dimensionalizing unit 30 causes the surface part extracted by the surface extracting unit 29 to have a three-dimensional structure. The surface part extracted by the surface extracting unit 29 does not have a three-dimensional structure by itself because it is composed of only part of the surface of the three-dimensional computer graphics. Because processing data with such a structure is complicated in three-dimensional image processing, the three-dimensionalizing unit 30 according to the present modification converts the surface part into a three-dimensional structure. Examples of the three-dimensional structure may include, but are not limited to, a cylindrical three-dimensional structure with a hollow part formed by providing a thickness to the extracted surface part in the inward direction (minus offset direction), a columnar three-dimensional structure with no hollow part formed by closing the end corresponding to the boundary with another region by a newly set surface structure, etc.

The boundary interpolating unit 31 performs interpolation on the boundary between the surface part extracted by the surface extracting unit 29 and the structure part added in the three-dimensionalization. It is preferable to smooth the boundary shape by performing curve interpolation, for example.

The shape information generating unit 32 generates the surface shape information again for the surface shape of the three-dimensionalized clothing region. The shape information generating unit 32 optimizes arrangement of vertices and the like in the surface shape.

After the surface shape is optimized by the shape information generating unit 32, the outer surface of the clothing region is subjected to UV unwrapping and is two-dimensionalized. Subsequently, the texture information is generated and provided to the two-dimensionalized outer surface, and the two-dimensionalized outer surface is reconverted into a three-dimensional structure. After that, the color, pattern, and the like are added to the outer surface by projecting RGB images relating to the hair part and the clothing part by simulative projection mapping.

As described above, the present modification extracts the part belonging to the hair region and the part belonging to the clothing region from the three-dimensional surface shape of the object and three-dimensionalizes them. Thus, the present modification generates the archetype data independent of the basic avatar.

### (Fourth Embodiment)

Next, the three-dimensional avatar generation device according to a fourth embodiment is described. Components according to the fourth embodiment denoted by the same name and the same reference numeral as those according to the first to the third embodiments implement the same functions as those according to the first to the third embodiments, unless otherwise noted.

The three-dimensional avatar generation device according to the fourth embodiment has a function of transplanting the hair part and the clothing part extracted from the three-dimensional surface shape of the object to the basic avatar of another person or the like. Specifically, the fourth embodiment performs predetermined processing using the basic avatar generated by the third embodiment using the three-dimensional surface shape of a specific person or the like and the independent archetype data relating to the clothing and the hair of the person or the like generated by the modification. Thus, the fourth embodiment transplants the clothing archetype and the hair archetype to the basic avatar relating to another person.

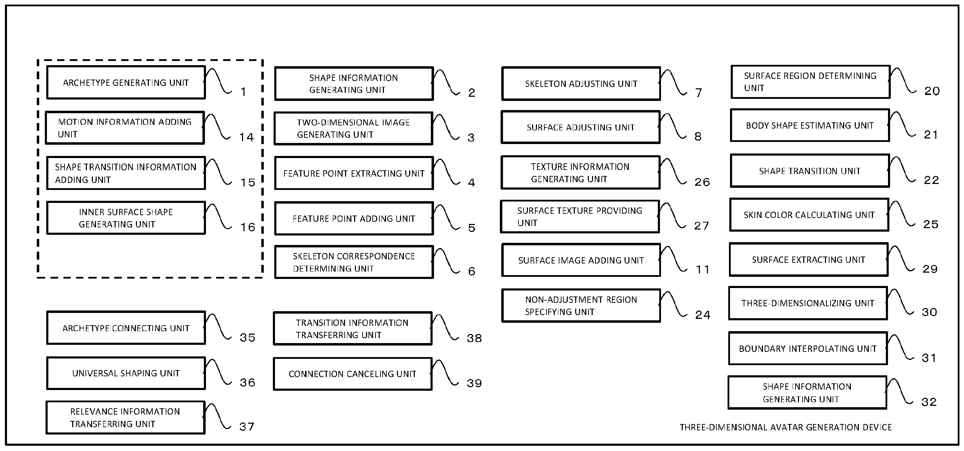

As illustrated in Fig. 8, the three-dimensional avatar generation device according to the fourth embodiment includes an archetype connecting unit 35, a universal shaping unit 36, a relevance information transferring unit 37, a transition information transferring unit 38, and a connection canceling unit 39 besides the components according to the first to the third embodiments. The archetype connecting unit 35 associates the clothing archetype and the hair archetype relating to a specific person with the basic avatar of the specific person. The universal shaping unit 36 integrally changes the basic avatar, the clothing archetype, and the hair archetype associated with each other by the archetype data connecting unit 35 into the shape of the universal archetype. The relevance information transferring unit 37 transfers the relevance information on the corresponding vertices of the universal archetype to the respective vertices constituting the clothing archetype and the hair archetype transformed into the shape of the universal archetype. The transition information transferring unit 38 transfers the shape transition information on the corresponding vertices of the universal archetype. The connection canceling unit 39 cancels the association of the clothing archetype and the hair archetype with the basic avatar.

The archetype connecting unit 35 associates the clothing archetype and the hair archetype extracted for a specific person or the like with the basic avatar of the same person. Specifically, the archetype connecting unit 35 performs a processing of connecting the clothing archetype and the hair archetype to the positions corresponding to the clothing region and the hair region, respectively, of the basic avatar while maintaining the independence of the clothing archetype and the hair archetype. By this processing, the clothing archetype and the hair archetype change their own shape in synchronization with the change in shape of the basic avatar while maintaining the independence from the basic avatar.

The universal shaping unit 36 changes the shapes of the basic avatar, the clothing archetype, and the hair archetype integrated with each other into the same shape as that of the universal archetype. As described in the third embodiment, the shape transition unit 22 adjusts the variable t for the universal archetype based on the transition information such that the basic avatar matches the three-dimensional surface shape of the object (replaced by the basic body shape in the clothing region or the like). The universal shaping unit 36 has a function of performing shape changing such that the shapes of the basic avatar, the clothing archetype, and the hair archetype match the shape of the universal archetype by performing processing opposite to that performed by the shape transition unit 22, that is, returning the variable t from the adjusted value to the value of the universal archetype.

The relevance information transferring unit 37 transfers the relevance information on the corresponding vertices on the universal archetype to the respective vertices constituting the clothing archetype and the hair archetype. As described above, the universal shaping unit 36 changes the shapes of the clothing archetype and the hair archetype so as to match the shape of the universal archetype, and the vertices on the universal archetype surface and the vertices of the clothing archetype or the like have correspondence with each other. By transferring the relevance information provided to the vertices on the universal archetype surface to the corresponding vertices, the clothing archetype and the hair archetype can follow the motions of the skeletal structure in the same way as the universal archetype surface.

The transition information transferring unit 38 transfers the transition information on the corresponding vertices on the universal archetype to the respective vertices constituting the clothing archetype and the hair archetype. As described in the third embodiment, the transition information is provided to the vertices constituting the surface shape of the universal archetype. The shape transition unit 22 appropriately adjusts the variable t of the transition information so as to match the basic body shape and generates the basic avatar. By providing the same transition information as that for the corresponding vertices on the universal archetype to the respective vertices constituting the clothing archetype and the hair archetype, the shape transition unit 22 can change the shape similarly to the universal archetype.

The connection canceling unit 39 cancels the connection relation between the basic avatar and the clothing and hair archetypes resulting from a series of processing. By separating the clothing archetype and the hair archetype having the three-dimensional surface shape matching the universal archetype and provided with the same relevance information and transition information as those of the universal archetype from the basic avatar, the clothing archetype and the hair archetype can be used as parts for another basic avatar. In other words, when a basic avatar is generated for another object, and the three-dimensional surface shape is changed by performing the same adjustment as the adjustment of the variable of the transition information in the basic avatar, the clothing archetype and the hair archetype match the shape of the basic avatar. By attaching the clothing archetype and the hair archetype in this state to the basic avatar, a three-dimensional avatar for the object with a hairstyle and clothing different from those at the time of photographing can be generated.

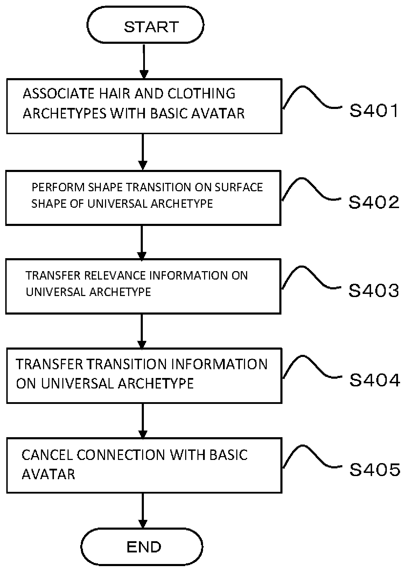

The following describes the operations performed by the three-dimensional avatar generation device according to the fourth embodiment with reference to Fig. 9. First, the archetype data connecting unit 35 performs association of integrating the basic avatar, the hair archetype, and the clothing archetype generated by the third embodiment and the modification (Step S401). Subsequently, the universal shaping unit 36 performs shape changing on the three-dimensional surface shape composed of the integrated basic avatar, clothing archetype, and hair archetype by adjusting the variable of the transition information so as to match the surface shape of the universal archetype (Step S402).

Subsequently, the relevance information on the universal archetype is transferred to the hair archetype and the clothing archetype (Step S403). After the transition information on the universal archetype is also transferred (Step S404), the connection relation of the hair archetype and the clothing archetype with the basic avatar is canceled (Step S405). By the process described above, the hair archetype and the clothing archetype can be attached to a certain basic avatar as independent parts, whereby a hairstyle and clothing different from those in the captured image data of the object can be provided to the certain basic avatar.

### Industrial Applicability

The present invention can be used as a technology for generating a high-quality three-dimensional avatar based on captured image data of an object.

### Reference Signs List

1 archetype generating unit
2 shape information generating unit
3 two-dimensional image generating unit
4 feature point extracting unit
5 feature point adding unit
6 skeletal correspondence determining unit
7 skeleton adjusting unit
8 surface adjusting unit
9, 26 texture information generating unit
10, 27 surface texture providing unit
11 surface image adding unit
14 motion information adding unit
15 shape transition information adding unit
16 inner surface shape generating unit
17, 24 non-adjustment region specifying unit
20 surface region determining unit
21 body shape estimating unit
22 shape transition unit
25 skin color calculating unit
29 surface extracting unit
30 three-dimensionalizing unit
31 boundary interpolating unit
32 shape information generating unit
35 archetype connecting unit
36 universal shaping unit
37 relevance information transferring unit
38 transition information transferring unit
39 connection canceling unit

## Claims

1. A three-dimensional avatar generation device configured to generate a three-dimensional avatar that represents a three-dimensional surface shape with a group of vertices and/or a group of faces based on captured image data of an object, the three-dimensional avatar generation device comprising:
surface shape generation means (2) configured to generate the three-dimensional surface shape based on the captured image data of the object;
skeletal structure estimation means (3, 4, 5) configured to convert the three-dimensional surface shape of the object into a two-dimensional image and estimate at least part of a skeletal structure based on the two-dimensional image;
skeletal correspondence determination means (6) configured to determine correspondence between the skeletal structure estimated by the skeletal structure estimation means and a skeletal structure in a universal archetype avatar that defines the three-dimensional surface shape, the skeletal structure, and relevance between the three-dimensional surface shape and the skeletal structure;
skeleton adjustment means (7) configured to adjust a position of the skeletal structure of the universal archetype avatar so as to be consistent with the correspondence determined by the skeletal correspondence determination means while maintaining a connection relation between components of the skeletal structure;
surface adjustment means (8) configured to move a group of vertices and/or a group of faces of the universal archetype avatar to positions corresponding to a group of vertices and/or a group of faces that represent the three-dimensional surface shape of the object based on correspondence between the group of vertices and/or the group of faces that represent the three-dimensional surface shape of the object and the group of vertices and/or the group of faces that represent the three-dimensional surface shape of the universal archetype avatar subjected to the positional adjustment of the skeletal structure; and
image addition means (11) configured to add an image obtained by processing the captured image data of the object to a surface of the universal archetype avatar on which the positional movement of the group of vertices and/or the group of faces is performed by the surface adjustment means.

2. The three-dimensional avatar generation device according to claim 1, wherein
the universal archetype avatar defines motion information that is information on positional change of the entire skeletal structure and an interlocking state between the components of the skeletal structure in a motion, shape transition information that defines a transition state of the group of vertices when shifting from a first shape to a second shape in at least a partial region of the three-dimensional surface shape, and information on the group of vertices that represents an internal shape, and
the group of vertices that represents the internal shape is not a target of the positional movement by the surface adjustment means.

3. The three-dimensional avatar generation device according to claim 2, further comprising:
surface region determination means (20) configured to determine a skin-exposed region, a clothing region, and a hair region in the three-dimensional surface shape based on the captured image data of the object;
basic body shape generation means (21) configured to generate a surface shape of a basic body shape by removing a clothing part from the clothing region determined by the surface region determination means; and
shape transition means (22) configured to change the surface shape of the universal archetype avatar so as to be consistent with the basic body shape based on the shape transition information, wherein
the surface adjustment means does not perform surface adjustment on at least the clothing region and the hair region, and a three-dimensional avatar not having information on clothing and hair of the captured image data of the object is generated.

4. The three-dimensional avatar generation device according to claim 3, comprising:
clothing region extraction means (29) configured to extract a surface structure positioned in the clothing region on the three-dimensional surface shape based on the captured image data of the object;
clothing archetype generation means (30) configured to convert an extracted part into a three-dimensional clothing archetype;
archetype connection means (35) configured to connect the clothing archetype to the three-dimensional avatar based on the captured image data;
universal shaping means (36) configured to change the shape of the three-dimensional avatar and the clothing archetype that are connected so as to match a three-dimensional surface shape of the universal archetype avatar based on the shape transition information;
information transfer means (37, 38) configured to transfer information on the relevance between the three-dimensional surface shape and the skeletal structure of the universal archetype avatar and the shape transition information to the clothing archetype the shape of which is changed; and
connection cancellation means (39) configured to cancel the connection of the clothing archetype with the three-dimensional avatar after the information is transferred by the information transfer means.

5. A three-dimensional avatar generation method for generating a three-dimensional avatar that represents a three-dimensional surface shape with a group of vertices and/or a group of faces based on captured image data of an object, the three-dimensional avatar generation method comprising:
a surface shape generation step of generating the three-dimensional surface shape based on the captured image data of the object;
a skeletal structure estimation step of converting the three-dimensional surface shape of the object into a two-dimensional image and estimating at least part of a skeletal structure based on the two-dimensional image;
a skeletal correspondence determination step of determining correspondence between the skeletal structure estimated at the skeletal structure estimation step and a skeletal structure in a universal archetype avatar that defines the three-dimensional surface shape, the skeletal structure, and relevance between the three-dimensional surface shape and the skeletal structure;
a skeleton adjustment step of adjusting a position of the skeletal structure of the universal archetype avatar so as to be consistent with the correspondence determined at the skeletal correspondence determination step while maintaining a connection relation between components of the skeletal structure;
a surface adjustment step of moving a group of vertices and/or a group of faces of the universal archetype avatar to positions corresponding to a group of vertices and/or a group of faces that represent the three-dimensional surface shape of the object based on correspondence between the group of vertices and/or the group of faces that represent the three-dimensional surface shape of the object and the group of vertices and/or the group of faces that represent the three-dimensional surface shape of the universal archetype avatar subjected to the positional adjustment of the skeletal structure; and
an image addition step of adding an image obtained by processing the captured image data of the object to a surface of the universal archetype avatar on which the positional movement of the group of vertices and/or the group of faces is performed at the surface adjustment step.

6. The three-dimensional avatar generation method according to claim 5, wherein
the universal archetype avatar defines motion information that is information on positional change of the entire skeletal structure and an interlocking state between the components of the skeletal structure in a motion, shape transition information that defines a transition state of the group of vertices when shifting from a first shape to a second shape in at least a partial region of the three-dimensional surface shape, and information on the group of vertices that represents an internal shape, and
the group of vertices that represents the internal shape is not a target of the positional movement at the surface adjustment step.

7. The three-dimensional avatar generation method according to claim 6, further comprising:
a surface region determination step of determining a skin-exposed region, a clothing region, and a hair region in the three-dimensional surface shape based on the captured image data of the object;
a basic body shape generation step of generating a surface shape of a basic body shape by removing a clothing part from the clothing region determined at the surface region determination step; and
a shape transition step of changing the surface shape of the universal archetype avatar so as to be consistent with the basic body shape based on the shape transition information, wherein
surface adjustment is not performed on at least the clothing region and the hair region at the surface adjustment step, and a three-dimensional avatar not having information on clothing and hair of the captured image data of the object is generated.

8. The three-dimensional avatar generation method according to claim 7, further comprising:
a clothing region extraction step of extracting a surface structure positioned in the clothing region on the three-dimensional surface shape based on the captured image data of the object;
a clothing archetype generation step of converting an extracted part into a three-dimensional clothing archetype;
an archetype connection step of connecting the clothing archetype to the three-dimensional avatar based on the captured image data;
a universal shaping step of changing the shape of the three-dimensional avatar and the clothing archetype that are connected so as to match a three-dimensional surface shape of the universal archetype avatar based on the shape transition information;
an information transfer step of transferring information on the relevance between the three-dimensional surface shape and the skeletal structure of the universal archetype avatar and the shape transition information to the clothing archetype the shape of which is changed; and
a connection cancellation step of canceling the connection of the clothing archetype with the three-dimensional avatar after the information is transferred at the information transfer step.

9. A three-dimensional avatar generation program for generating a three-dimensional avatar that represents a three-dimensional surface shape with a group of vertices and/or a group of faces based on captured image data of an object, the three-dimensional avatar generation program causing a computer to perform:
a surface shape generation step of generating the three-dimensional surface shape based on the captured image data of the object;
a skeletal structure estimation step of converting the three-dimensional surface shape of the object into a two-dimensional image and estimating at least part of a skeletal structure based on the two-dimensional image;
a skeletal correspondence determination step of determining correspondence between the skeletal structure estimated at the skeletal structure estimation step and a skeletal structure in a universal archetype avatar that defines the three-dimensional surface shape, the skeletal structure, and relevance between the three-dimensional surface shape and the skeletal structure;
a skeleton adjustment step of adjusting a position of the skeletal structure of the universal archetype avatar so as to be consistent with the correspondence determined at the skeletal correspondence determination step while maintaining a connection relation between components of the skeletal structure;
a surface adjustment step of moving a group of vertices and/or a group of faces of the universal archetype avatar to positions corresponding to a group of vertices and/or a group of faces that represent the three-dimensional surface shape of the object based on correspondence between the group of vertices and/or the group of faces that represent the three-dimensional surface shape of the object and the group of vertices and/or the group of faces that represent the three-dimensional surface shape of the universal archetype avatar subjected to the positional adjustment of the skeletal structure; and
an image addition step of adding an image obtained by processing the captured image data of the object to a surface of the universal archetype avatar on which the positional movement of the group of vertices and/or the group of faces is performed at the surface adjustment step.

10. The three-dimensional avatar generation program according to claim 9, wherein
the universal archetype avatar defines motion information that is information on positional change of the entire skeletal structure and an interlocking state between the components of the skeletal structure in a motion, shape transition information that defines a transition state of the group of vertices when shifting from a first shape to a second shape in at least a partial region of the three-dimensional surface shape, and information on the group of vertices that represents an internal shape, and
the group of vertices that represents the internal shape is not a target of the positional movement at the surface adjustment step.

11. The three-dimensional avatar generation program according to claim 10, further comprising:
a surface region determination step of determining a skin-exposed region, a clothing region, and a hair region in the three-dimensional surface shape based on the captured image data of the object;
a basic body shape generation step of generating a surface shape of a basic body shape by removing a clothing part from the clothing region determined at the surface region determination step; and
a shape transition step of changing the surface shape of the universal archetype avatar so as to be consistent with the basic body shape based on the shape transition information, wherein
surface adjustment is not performed on at least the clothing region and the hair region at the surface adjustment step, and a three-dimensional avatar not having information on clothing and hair of the captured image data of the object is generated.

12. The three-dimensional avatar generation program according to claim 11, further comprising:
a clothing region extraction step of extracting a surface structure positioned in the clothing region on the three-dimensional surface shape based on the captured image data of the object;
a clothing archetype generation step of converting an extracted part into a three-dimensional clothing archetype;
an archetype connection step of connecting the clothing archetype to the three-dimensional avatar based on the captured image data;
a universal shaping step of changing the shape of the three-dimensional avatar and the clothing archetype that are connected so as to match a three-dimensional surface shape of the universal archetype avatar based on the shape transition information;
an information transfer step of transferring information on the relevance between the three-dimensional surface shape and the skeletal structure of the universal archetype avatar and the shape transition information to the clothing archetype the shape of which is changed; and
a connection cancellation step of canceling the connection of the clothing archetype with the three-dimensional avatar after the information is transferred at the information transfer step.
